# EUROPEAN PATENT SPECIFICATION

(11) **EP 2 136 091 B1**
(45) Date of publication and mention of the grant of the patent: **28.12.2011**
(21) Application number: 08425430.9
(22) Date of filing: 17.06.2008
(51) Int. Cl.: F16C 33/20

(54) **Sliding flange bearing**
Gleitflanschlager
Palier coulissant à bride

(43) Date of publication of application: 23.12.2009
(73) Proprietor: Technymon S.R.L., 24060 Castelli Calepio (BG) (IT)
(72) Inventor: Mongodi, Raniero, 24060 Castelli Calepio (BG) (IT)
(74) Representative: Bruni, Giovanni

(56) References cited:
- US-A- 3 606 657
- US-A- 4 592 782
- US-A- 5 525 203
- US-A- 5 679 743
- US-A- 6 095 690

## Description

The object of the present finding is a sliding flange bearing, in particular of the type comprising an outer metallic bush and a crown of plastic material on the inside joined to the metal through vulcanization, with improved characteristics of adhesion of the metallic bush and of the crown of plastic material. The bearing, already known since 1870, is one of the elements of a kinematic pair that allows relative rotations between two elements.

The sliding bearings differ from one another in type of sliding that is either dry or with lubricant. In particular, the sliding bearings with dry operation are made from bronze and for this reason they are also known in Italian as "*bronzine*"; later, due to the increased cost of bronze, this raw material was almost totally replaced with thermoplastic materials, like for example polytetrafluoroethylene (PTFE) commonly known by the trade name "Teflon".

The materials from which sliding bearings are made are characterised by a low friction coefficient so as to reduce the energy dissipated in heat and therefore reduce the operating temperature of the bearing itself; by good mechanical strength and surface hardness so that it wears down slowly, with the hardness that must be greater than that of the connected shaft; moreover, they have to have excellent heat conduction to allow the heat to flow out; finally, they have to be resistant to corrosion: indeed, the support, the shaft and the bearing brass can still be immersed in lubricant, where it is not unusual for acid radicals to develop that can compromise the correct operation of the bearing. All of these characteristics must be influenced little by the variation in temperature. In particular, in work conditions with temperatures that are not high and in the case of low mechanical strength, the metallic materials can be entirely replaced with thermoplastic materials; when, on the other hand, the required mechanical strengths are high, the thermoplastic materials are applied partially on the metal with a thin layer in order to reduce the friction coefficient and improve lubrication during use.

Sliding flange bearings are known in the state of the art and can normally be found on the market, widely available in all fields of mechanics like for example the manufacture of machine tools, of motors, or of vehicles in general. The task that these bearings have to perform is to reduce the friction between two objects in rotary or linear movement with respect to one another.

For example, international patent application WO04079217 has as its object the composite material of a bearing with steel outer bush and inner crown. Said material is PTFE-based with addition of an additive, so as to achieve both good dry operating quality of the PTFE with low friction coefficient and the mechanical properties of conventional metallic bearings, and it boasts the vastest range of performances and a greater number of applications compared to any other material for a bearing. Moreover, sliding flanged bearings, characterised by a sliding surface made from PTFE, which with an operating temperature of up to 230 °C does not absorb water and possesses a very low friction coefficient, have the disadvantage that, under pressure, the material tends to deform due to molecular sliding. Moreover, their mechanical characteristics are relatively low and the deformation load is just 80 kg/cm².

According to a further example, like the one described in European patent EP1511624, a particular composite material of a sliding bearing comprises a layer of plastic material (PEEK) added with lubricant as well as a sliding surface between the two moving elements.

If on the one hand examples of flange bearings coated in Teflon are known, there are no solutions currently known of flange bearings for applications using lubricant. Today, the market needs said sliding flange bearings both for special applications (for example for use with food), and in applications for which it is necessary to foresee the absorption of knocks during use. For this purpose, the use of acetalic resins constitutes a valid solution for applications with lubrication, as an alternative to solid bronze, which is too expensive, and to PTFE, suitable for dry applications.

Acetalic resins have an excellent quality/price relationship, being equipped with high resistance to compression, low friction coefficient and high surface hardness; moreover, their good behaviour in the presence of many chemical substances and their easy workability makes them able to be used in multiple fields, above all those that require mass production.

US 3,606,657 discloses a method according to which thermoplastic polyacetal synthetic resin powders are mixed with an excess of a Lubricant oil heated to a temperature not lower than the melting point of the synthetic resin during agitating, and allowed to settle to obtain a precipitate deposit. The resulting precipitate was pulverized to produce lubricant containing thermoplastic synthetic resin powders, and the powders obtained are impregnated and coated on a porous powder metallurgical layer of bronze alloy sintered on the surface of a steel plate, which plate has a layer of lubricant free synthetic resin thereon, thereby manufacturing composite bearings.

However, in the manufacture of flange bearings acetalic resin has proven unsuitable: it does not have good adhesion to the metallic surface; indeed, after having been deposited, polymerised and cooled, it is subject to scaling and detachment from the contact surface. In particular, the part affected most by this phenomenon is the joining portion between the inner surface of the bearing and the surface of the flange, with consequent deterioration of the performance of the bearing.

US 5,679,743 describes a polyacetal resin composition comprising 100 parts by weight of a polyacetal resin (A), 0.3 to 10 parts by wight of an olefin copolymer (B) composed of 30 to 70 wt % of ethylene-propylene-diene rubber (B1), 30 to 70 wt % of an ethylene-vinyl acetate copolymer (B2) with a vinyl acetate content of 18 to 40 wt % and 1 to 25 wt % of an ethylene-(C4-6) olefin-1 copolymer (B3), and 0.1 to 10 parts by weight of a styrene-based thermoplastic elastomer (C) having a functional group. In this document the use of an elastomer is disclosed but no mention is done about the application of such material to a flanged bearing.

A purpose of the finding object of the present invention is to provide a solution to the technical problem of the detachment of acetalic resin from the metallic layer during the moulding step, so as to allow flange bearings to be made with anti-friction coating in said resin. This is achieved by adding an elastomer to the acetalic resin that, consequently, improves the characteristics of elasticity of the anti-friction coating as a whole.

The finding object of the present invention is, therefore, a sliding flange bearing, with possible through holes over its entire thickness, comprising at least one layer of metal, at least one layer of sintered bronze powder and at least one layer of acetalic resin - as anti-friction layer or sliding layer - characterised in that said resin is added with an elastomer, as specified in claim 1. More specifically, said sliding flange bearing comprises at least one layer of acetalic resin with additive characterised by a polyoxymethylene matrix (POM) and by an elastomer such that, in conditions with a speed of 1 mm/min and a temperature of 23°C:
- the modulus of tensile elasticity is within a range between 1900 - 2700 Mpa;
- the elongation at yield is within a range between 15 - 20%;
- the elongation at break is within a range between 90 - 115%.

Clearly, said sliding flange bearing can be used in any field of mechanics.

These and other advantages shall become clear during the course of the detailed description of the invention that shall refer specifically to table 1/1 in which some preferred example embodiments of the present finding are represented, absolutely not for limiting purposes.

In particular:
- Fig.1 shows a section of the profile of material of the sliding flange bearing;
- Fig.2, in views "a" and "b", respectively, shows the plane view and a section of the flange bearing.

With reference to the aforementioned figures, the sliding flange bearing according to the invention is generically indicated with 1. It comprises a layer of steel 5, a layer of sintered bronze powder 3 and a layer of acetalic resin 2 with additive, with possible through holes over the entire thickness of the bearing 1. Said layer of acetalic resin 2 is characterised by a polyoxymethylene matrix and by an elastomeric additive, which reduces the surface hardness of the resin, but increasing its elasticity so as to allow a complete adhesion of the layer of resin to the layer of steel 5.

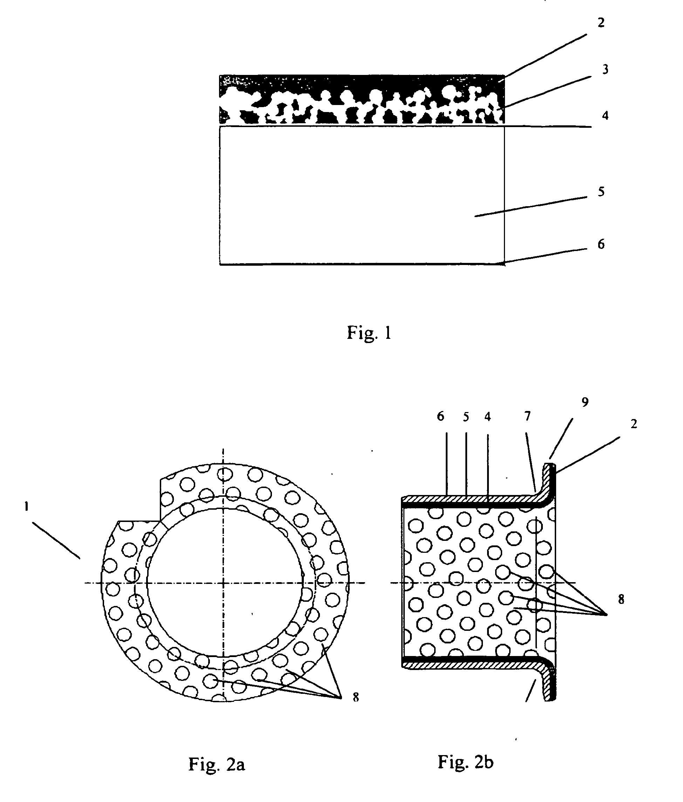

According to a particular embodiment, the layer of steel 5 is arranged between two layers of copper 4, 6. In particular, the layer 6 is then coated with tin or zinc in order to protect the metallic material from corrosion, as indicated in figure 1.

Said layer of acetalic resin 2 with additive, in a preferred embodiment, has a plurality of pits 8 over the entire surface suitable for containing the lubricant so as to improve the anti-friction properties of the bearing. Said pits 8 can be differently shaped, for example frusto-conical shaped, as shown in figure 2. The process for making a profile for sliding bearings is characterised by the following steps: unrolling a steel coil so as to obtain a foil 5; pickling the foil 5, suitable for eliminating the existing rust patina by means of acids or other chemical substances, and possible electrolytic copper plating in order to arrange the steel foil 5 between two layers of copper 4, 6; oven drying and subsequent deposition on the layer of steel 5 or on the possible layer of copper 4 of a layer of bronze powder 3; deposition on the layer of copper 6 of at least one layer of tin or zinc; sintering in a tunnel oven and subsequent cooling; followed by deposition and polymerisation of the resin with elastomeric additive in a tunnel oven; possible making of frusto-conical pits on the entire surface of the resin, lamination and slow cooling. In order to obtain the finished product, i.e. the sliding flange bearing, the profile thus obtained is cut longitudinally to obtain straps of variable size according to the bearing to be produced; then follows the step of calibrating the thickness in a rolling mill and making the side bevels of the strap; thereafter, the strap is cross sectioned according to the diameter of the bearing to be made, and then, it is bent so that the layer of resin 2 with additive is arranged inside the bearing, whereas the layer of steel 5 or the possible copper coating 6 constitute the outer surface of the bearing.

The cylinder-shaped piece thus obtained is calibrated so as to obtain the required roundness; finally, there follow one or more subsequent bending operations of the profile along a circumference of the cylinder, each with an incremented bending angle until the definition of the flange 9 with the required angle 7.

In a preferred embodiment, the bending angle of the flange 7 arranged at an end of the strap is 90°, as indicated in fig. 2b, and it requires two successive bending operations with incremental angle of 45°.

According to a further embodiment, the acetalic resin is added to the elastomer as well as the graphite that gives the product a dark gray colour but, above all, it ensures a certain degree of self-lubricating property to the sliding layer. Indeed, since the anti-friction coating is classified as a material to be pre-lubricated, the use of graphite constitutes a very big difference in practice, ensuring less wear and therefore better reliability of the product in the case in which the end user, for example of farming machinery, does not carry out the recommended maintenance. Of course, the embodiments presented above are just some nonlimiting example embodiments of the finding.

The advantages of the finding in object are clear: improvement of the characteristics both in terms of reliability and of lifetime of the bearing thanks to the good adhesion of the layer of acetalic resin with additive to the metallic layer and reduction of the cost of the bearing since a part of the metallic material is replaced by the less expensive layer of acetalic resin with elastomeric additive.

## Claims

1. Sliding flange bearing comprising at least one layer of steel (5), at least one layer of sintered bronze powder (3), at least one layer of acetalic resin (2) with additive, with possible through holes over the entire thickness of the bearing, said acetalic resin comprises a polyoxymethylene matrix (POM) **characterised in that** the acetalic resin is added with an elastomer and has the following properties for a speed equal to 1 mm/min and a temperature of 23°C:
• the modulus of tensile elasticity is within a range between 1900 - 2700 Mpa;
• the elongation at yield is within a range between 15 - 20%;
• the elongation at break is within a range between 90 - 115%;

2. Sliding flange bearing according to claim 1, **characterised in that** said metallic layer (5) is arranged between two layers of copper (4, 6).

3. Sliding flange bearing according to claim 2, **characterised in that** said layer of copper (6) is coated with at least one layer of tin or zinc in order to protect the metallic material from corrosion.

4. Sliding flange bearing according to one of claims 1 to 3, **characterised in that** said layer of resin (2) with additive has a plurality of pits (8) on the entire surface.

5. Sliding flange bearing according to claim 4, **characterised in that** said pits (8) present on the layer of resin (2) with additive are frustoconical shaped.

6. Sliding flange bearing according to one of the previous claims, **characterised in that** graphite is added to said layer of resin (2) with additive.

7. Process for making a profile for sliding bearings according to one of the previous claims, **characterised by** the following steps:
• unrolling a steel coil, so as to obtain a foil (5);
• pickling the foil, suitable for eliminating the patina of rust present on the steel foil (5);
• possible electrolytic copper plating, in order to arrange the foil (5) between two layers of copper (4,6);
• oven drying;
• deposition on the layer of steel (5) or on the possible layer of copper (4) of a layer of bronze powder (3);
• possible deposition on the layer of copper (6) of at least one layer of tin or zinc;
• sintering in a tunnel oven and cooling;
• deposition and polymerisation of at least one layer of acetalic resin with elastomeric additive (2) on the layer of sintered bronze powder (3) in a tunnel oven;
• possible making of pits on the entire surface of the resin;
• lamination and slow cooling.

8. Use of the sliding bearing, according to one of the claims 1 to 6, for all fields of mechanics, in particular farming machines and heavy goods vehicles.

## Patentansprüche

1. Flanschgleitlager, das mindestens eine Stahlschicht (5), mindestens eine Schicht aus gesintertem Bronzepulver (3) und mindestens eine Schicht aus Acetalharz (2) mit Additiv mit möglichen Durchgangslöchern über die gesamte Dicke des Lagers umfasst, wobei das Acetalharz eine Polyoxymethylen-Matrix (POM) umfasst, **dadurch gekennzeichnet, dass** an das Acetalharz ein Elastomer additiert ist und dass es bezogen auf eine Geschwindigkeit von 1 mm/min und eine Temperatur von 23°C die folgenden Eigenschaften aufweist:
• der Zug-Elastizitätsmodul liegt in einem Bereich zwischen 1900 und 2700 MPa;
• die Streckdehnung liegt in einem Bereich zwischen 15 und 20%;
• die Bruchdehnung liegt in einem Bereich zwischen 90 und 115%;

2. Flanschgleitlager nach Anspruch 1, **dadurch gekennzeichnet, dass** die metallische Schicht (5) zwischen zwei Kupferschichten (4, 6) angeordnet ist.

3. Flanschgleitlager nach Anspruch 2, **dadurch gekennzeichnet, dass** die Kupferschicht (6) mit mindestens einer Schicht aus Zinn oder Zink überzogen ist, um den metallischen Werkstoff gegen Korrosion zu schützen.

4. Flanschgleitlager nach einem der Ansprüche von 1 bis 3, **dadurch gekennzeichnet, dass** die Schicht aus Harz (2) mit Additiv eine Vielzahl von Vertiefungen (8) auf der gesamten Oberfläche aufweist.

5. Flanschgleitlager nach Anspruch 4, **dadurch gekennzeichnet, dass** die Vertiefungen (8) in der Schicht aus Harz (2) mit Additiv kegelstumpfförmig sind.

6. Flanschgleitlager nach einem der vorherigen Ansprüche, **dadurch gekennzeichnet, dass** zur Schicht aus Harz (2) mit Additiv Graphit hinzugefügt ist.

7. Verfahren zum Herstellen eines Profils für Gleitlager nach einem der vorherigen Ansprüche, das durch die folgenden Schritte **gekennzeichnet** ist:
• Abwickeln eines Stahlcoils, um eine Folie (5) zu erhalten;
• geeignetes Beizen der Folie zum Entfernen der Rostschicht auf der Stahlfolie (5);
• ggf. elektrolytische Kupferabscheidung, um die Folie (5) zwischen zwei Kupferschichten (4, 6) anzuordnen;
• Ofentrocknung;
• Aufbringen einer Schicht aus Bronzepulver (3) auf die Stahlschicht (5) oder auf die mögliche Kupferschicht (4);
• ggf. Aufbringen von mindestens einer Schicht aus Zinn oder Zink auf die Kupferschicht (6);
• Sintern in einem Tunnelofen und Kühlen;
• Aufbringen und Polymerisieren von mindestens einer Schicht aus Acetalharz mit einem Elastomer-Additiv (2) auf die Schicht aus gesintertem Bronzepulver (3) in einem Tunnelofen;
• ggf. Herstellen von Vertiefungen auf der gesamten Oberfläche des Harzes;
• Laminieren und langsames Abkühlen.

8. Verwendung des Gleitlagers nach einem der Ansprüche von 1 bis 6 in allen Bereichen der Mechanik, insbesondere für Landmaschinen und Schwerlastwagen.

## Revendications

1. Palier coulissant à bride comprenant au moins une couche d'acier (5), au moins une couche de poudre de bronze fritté (3), au moins une couche de résine acétal (2) avec additif, avec d'éventuels trous passants sur toute l'épaisseur du palier, ladite résine acétal comprend une matrice de polyoxyméthylène (POM) **caractérisée en ce que** la résine acétal est ajoutée avec un élastomère et a les propriétés suivantes pour une vitesse égale à 1 mm/min et une température de 23 °C:
• le module d'élasticité à la traction est dans une plage comprise entre 1900 et 2700Mpa ;
• l'allongement au seuil d'écoulement est dans une plage comprise entre 15 et 20% ;
• l'allongement à la rupture est dans une plage comprise entre 90 et 115%.

2. Palier coulissant à bride selon la revendication 1, **caractérisé en ce que** ladite couche métallique (5) est disposée entre deux couches de cuivre (4, 6).

3. Palier coulissant à bride selon la revendication 2, **caractérisé en ce que** ladite couche de cuivre (6) est revêtue d'au moins une couche d'étain ou de zinc afin de protéger le matériau métallique contre la corrosion.

4. Palier coulissant à bride selon l'une des revendications 1 à 3, **caractérisé en ce que** ladite couche de résine (2) avec additif a une pluralité de creux (8) sur toute la surface.

5. Palier coulissant à bride selon la revendication 4, **caractérisé en ce que** lesdits creux (8) présents sur la couche de résine (2) avec additif sont de forme tronconique.

6. Palier coulissant à bride selon l'une des revendications précédentes, **caractérisé en ce que** du graphite est ajouté à ladite couche de résine (2) avec additif.

7. Procédé pour fabriquer un profil pour paliers coulissants selon l'une des revendications précédentes, **caractérisé par** les étapes suivantes
• déroulement d'une bobine d'acier, afin d'obtenir une feuille (5);
• décapage de la feuille, apte à éliminer la patine de rouille présente sur la feuille d'acier (5) ;
• éventuel cuivrage électrolytique, afin de disposer la feuille (5) entre deux couches de cuivre (4, 6) ;
• étuve ;
• dépôt sur la couche d'acier (5) ou sur l'éventuelle couche de cuivre (4) d'une couche de poudre de bronze (3) ;
• éventuel dépôt sur la couche de cuivre (6) d'au moins une couche d'étain ou de zinc;
• frittage dans une étuve-tunnel et refroidissement ;
• dépôt et polymérisation d'au moins une couche de résine acétal avec additif élastomère (2) sur la couche de poudre de bronze fritté (3) dans une étuve-tunnel ;
• éventuelle fabrication de creux sur toute la surface de la résine;
• laminage et de refroidissement lent.

8. Utilisation du palier coulissant, selon l'une des revendications 1 à 6, pour tous les domaines de la mécanique, en particulier des machines agricoles et véhicules poids lourds.
